(19) **Europäisches Patentamt / European Patent Office / Office européen des brevets**

(11) **EP 4 361 291 A1**

(12) # EUROPEAN PATENT APPLICATION
published in accordance with Art. 153(4) EPC

(43) Date of publication:
**01.05.2024 Bulletin 2024/18**

(21) Application number: **22855738.5**

(22) Date of filing: **14.06.2022**

(51) International Patent Classification (IPC):
**C21C 5/30** (2006.01)   **C21C 1/02** (2006.01)

(52) Cooperative Patent Classification (CPC):
**C21C 1/02; C21C 5/30**

(86) International application number:
**PCT/JP2022/023807**

(87) International publication number:
**WO 2023/017674 (16.02.2023 Gazette 2023/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.08.2021 JP 2021130433**

(71) Applicant: **JFE Steel Corporation**
**Tokyo 100-0011 (JP)**

(72) Inventors:
• **YOKOMORI, Rei**
**Tokyo 100-0011 (JP)**

• **KAWABATA, Ryo**
**Tokyo 100-0011 (JP)**
• **KIKUCHI, Naoki**
**Tokyo 100-0011 (JP)**
• **SUGINO, Tomohiro**
**Tokyo 100-0011 (JP)**
• **KASE, Hiroto**
**Tokyo 100-0011 (JP)**

(74) Representative: **Hoffmann Eitle**
**Patent- und Rechtsanwälte PartmbB**
**Arabellastraße 30**
**81925 München (DE)**

(54) **COLD IRON SOURCE MELTING RATE ESTIMATION DEVICE, CONVERTER-TYPE REFINING FURNACE CONTROL DEVICE, COLD IRON SOURCE MELTING RATE ESTIMATION METHOD, AND MOLTEN IRON REFINING METHOD**

(57) There is provided a cold iron source melting ratio estimation device capable of, in the refining of molten iron using a converter-type refining furnace, accurately estimating the melting behavior of a cold iron source in a short time while suppressing computational costs and without being influenced by the operator's subjectivity.

A cold iron source melting ratio estimation device according to the present invention is a cold iron source melting ratio estimation device 5 that estimates a melting ratio of a cold iron source charged into a converter-type refining furnace 1 during refining of molten iron in the converter-type refining furnace. The device includes: an input section 6 to which measured values of in-furnace information or estimated values of the in-furnace information is input, the in-furnace information including a molten iron temperature and a carbon concentration in the molten iron during refining; a database section 7 that stores a model equation and parameters related to a refining reaction of the molten iron in the converter-type refining furnace; a computation section 8 that computes the melting ratio of the cold iron source using the measured values or the estimated values input to the input section; and an output section 9 that displays the melting ratio of the cold iron source computed by the computation section.

EP 4 361 291 A1

# FIG. 1

**Description**

Technical Field

The present invention relates to a cold iron source melting ratio estimation device that, in the refining of molten iron contained in a converter-type refining furnace by supplying oxygen gas to the molten iron to oxidize and refine the molten iron, estimates in real time the melting ratio of a cold iron source charged into the converter-type refining furnace, and a converter-type refining furnace control device equipped with the cold iron source melting ratio estimation device. The present invention also relates to a cold iron source melting ratio estimation method of estimating, in real time, the melting ratio of a cold iron source charged into a converter-type refining furnace, and a molten iron refining treatment method using the cold iron source melting ratio estimation method. Here, "molten iron" means either molten pig iron or molten steel, and if it is possible to clearly distinguish between molten pig iron and molten steel, it is described as "molten pig iron" or "molten steel".

Background Art

In recent years, from the perspective of preventing global warming, the steel industry has also been required to reduce the amount of generation of $CO_2$ gas. In a blast furnace method, iron ore is reduced with carbon to produce molten pig iron, and a carbon source of about 500 kg is required to produce 1 ton of molten pig iron. In contrast, if a cold iron source is melted in a converter-type refining furnace to produce molten pig iron or molten steel, molten pig iron or molten steel can be produced without undergoing a carbon reduction process. In this way, by replacing molten pig iron or molten steel with the same amount of cold iron source, about 1.5 tons of $CO_2$ gas per ton of molten iron (molten pig iron or molten steel) produced is expected to be reduced. In other words, in order to suppress the generation of $CO_2$ gas while maintaining the production amount of molten pig iron or molten steel, it can be said that it is effective to increase the amount of cold iron source used in the steelmaking process.

However, when refining raw materials containing molten pig iron mixed with a cold iron source in a converter-type refining furnace to produce dephosphorized molten pig iron or molten steel, it is necessary to compensate for the heat absorption resulting from the heating and melting of the cold iron source. This heat is supplied by the heat of reaction between oxygen blown in during refining and carbon and silicon contained as impurity elements in the molten pig iron.

Therefore, if the molten pig iron ratio is reduced in order to increase the amount of cold iron source used, the reaction heat of the carbon and silicon contained in the molten pig iron alone will be insufficient, and the cold iron source may not be completely melted during refining. The molten pig iron ratio is the ratio (percentage) of the molten pig iron charge to the total charge (the sum of the molten pig iron charge and the cold iron source charge). In particular, in preliminary dephosphorization treatment of molten pig iron in a converter-type refining furnace, dephosphorization at low temperatures is thermodynamically advantageous, which means that the treatment temperature of the molten pig iron is at most around 1400°C. Because the temperatures of preliminary dephosphorization treatment of molten pig iron are lower than the temperatures of decarburization treatment (hereinafter also referred to as "decarburization refining") of molten pig iron in a converter-type refining furnace, there is a concern that the cold iron source may not be completely melted.

The unmelted cold iron source remains at the bottom of the furnace even after the relevant charge is tapped out following refining. In that case, for treatment of the molten pig iron in the converter-type refining furnace in the next charge using the converter-type refining furnace, it is necessary to increase the molten pig iron ratio in order to melt the residual unmelted cold iron source, and hence, the amount of cold iron source used does not increase. In addition, in the case where the refining involves preliminary dephosphorization treatment of the molten pig iron, operational issues such as insufficient tapping volume may arise, resulting in the need for additional molten pig iron to perform subsequent decarburization treatment. Furthermore, if the solidified cold iron source adheres to the bottom of the furnace, metallurgical drawbacks such as poor agitation of molten metal in the furnace due to blockage of the bottom-blowing tuyeres can occur, leading to a reduction in refining efficiency.

From the above, when charging a cold iron source in the refining of molten iron using a converter-type refining furnace, it is important to grasp the presence of unmelted cold iron source remaining in the furnace during refining, especially when charging a cold iron source in preliminary dephosphorization treatment of molten pig iron.

Major methods of determining the presence of residual unmelted cold iron source involve determining the timing of complete melting of the cold iron source by sensing, and the application of these methods is often limited to electric arc furnaces.

In the meantime, for converter-type refining furnaces, there are not many proposed methods for determining the presence of residual unmelted cold iron source. For example, Patent Literature 1 proposes a method of performing multi-point measurement of the refractory temperature in the thickness direction of a furnace side wall using a temperature measurement probe buried in the furnace side wall, and, from the obtained temperature gradient and refractory residual thickness, continuously estimating the refractory surface temperature on the side in contact with molten pig iron. This is a method that focuses on an increase in the temperature rise rate of the molten pig iron in the furnace after the cold iron source in the furnace is completely melted, which makes it possible to determine the complete melting time of the cold iron source based on the transition of the refractory surface temperature on the side in contact with the molten pig iron.

In addition, although examples of applications to actual operation are few, a one-dimensional heat transfer model that predicts the melting behavior of a cold iron source (hereinafter, a heat transfer model that predicts the melting behavior of a cold iron source by computations is referred to as a "cold iron source melting model") has been reported extensively. For example, in the cold iron source melting models described in Non Patent Literature 1 and 2, the melting behavior of a cold iron source can be accurately predicted by assuming the heat transfer coefficient between the molten iron and the cold iron source and the mass transfer coefficient of the molten iron. In order to apply a cold iron source melting model to actual operation, it is necessary to successively input information such as the molten iron temperature and the carbon concentration in the molten iron obtained by sensing. In the computation of the cold iron source melting model, not only the complete melting timing of the cold iron source but also the moment-by-moment melting ratio of the cold iron source can be obtained, and thus there is an advantage in being able to predict the occurrence of unmelted cold iron source during the refining of molten iron.

Citation List

Patent Literature

PTL 1: Japanese Unexamined Patent Application Publication No. 8-3614

Non Patent Literature

NPL 1: Masahiro Kawakami, Koichi Takaya, and Lviv Bravier, Tetsutohagane (Iron and Steel), vol. 85 (1999) No. 9. p. 658-665
NPL 2: Koichi Isobe, Hirofumi Maede, Kosaku Ozawa, Issei Umezawa, and Chikara Saito, Tetsutohagane (Iron and Steel), vol. 76 (1990) No. 11. p. 2033-2040

Summary of Invention

Technical Problem

However, the above-mentioned prior art has the following issues. That is, Patent Literature 1 does not refer to the threshold of the rise rate of the refractory surface temperature on the side in contact with the molten pig iron, where the complete melting timing of the cold iron source serves as the criterion for the determination, and the determination is influenced by the operator's subjectivity. In addition, in actual operation, due to factors such as changes in the flow rate of top-bottom blown gas, the transition of the refractory surface temperature on the side in contact with the molten pig iron changes, and accordingly, there is a great concern about erroneous determination or delays in determination.

Moreover, in conventional cold iron source melting models such as those described in Non Patent Literature 1 and 2, it is common to use the one-dimensional heat transfer formula indicated in equation (1) below to compute the temperature distribution inside the cold iron source and the interface temperature:

[Math. 1]

$$\frac{\partial T_S}{\partial t} = \alpha_S \frac{\partial^2 T_S}{\partial x^2} \quad \cdots (1)$$

Here, in equation (1) above, $T_S$ is the temperature (K) of the cold iron source, t is time (s), $\alpha_S$ is the thermal diffusion rate ($m^2/s$) of the cold iron source, and x is the position (m) in the thickness direction of the cold iron source.

When equation (1) above is computed on a computer, it is treated discretely. Therefore, if the computational mesh is refined to improve the accuracy of the estimation of the melting behavior of the cold iron source, there is an issue that the computation will become costly and time consuming. In order to estimate the melting behavior of the cold iron source in real time in actual operation, the computation time needs to be much shorter than the refining time.

The present invention has been made in view of the above circumstances, and it is an object thereof to provide, in the refining of molten iron using a converter-type refining furnace, when estimating in real time the melting ratio of a cold iron source during refining through model calculations and predicting the occurrence of unmelted cold iron source, a cold iron source melting ratio estimation device, a converter-type refining furnace control device, a cold iron source melting ratio estimation method, and a molten pig iron refining treatment method capable of accurately estimating the melting behavior of the cold iron source in a short time while minimizing calculation costs and without being influenced by the operator's subjectivity. Solution to Problem

The gist of the present invention for solving the above problem is as follows.

[1] A cold iron source melting ratio estimation device for estimating a melting ratio of a cold iron source charged into a converter-type refining furnace during refining of molten iron in the converter-type refining furnace, the device including: an input section to which measured values of in-furnace information or estimated values of the in-furnace information are input, the in-furnace information including a molten iron temperature and a carbon concentration in the molten iron during refining; a database section that stores a model equation and parameters related to a refining reaction of the molten iron in the converter-type refining furnace; a computation section that computes the melting ratio of the cold iron source using the measured values or the estimated values input to the input section; and an output section that displays the melting ratio of the cold iron source computed by the computation section.

[2] The cold iron source melting ratio estimation device according to [1], wherein the output section displays in a manner that is monitorable by an operator who operates the converter-type refining furnace.

[3] A converter-type refining furnace control device including: the cold iron source melting ratio estimation device according to [1] of [2]; a process computer that computes an amount of oxygen to be supplied, and necessity and an amount of loading a cooling agent or a heating agent in order to achieve target values for the molten iron temperature and a molten iron component concentration at an end of the refining; and an operation control computer that controls operating conditions so that target values will be achieved for the molten iron temperature and the molten iron component concentration at the end of the refining based on the amount of oxygen and the amount of loading a cooling agent or a heating agent computed by the process computer.

[4] A cold iron source melting ratio estimation method of estimating, using a computer, a melting ratio of a cold iron source charged into a converter-type refining furnace during refining of molten iron using the converter-type refining furnace, the method including: an input step of inputting, to the computer, measured values of in-furnace information or estimated values of the in-furnace information, the in-furnace information including a molten iron temperature and a carbon concentration in the molten iron during refining; a computation step of computing the melting ratio of the cold iron source using the measured values or the estimated values input to the computer, a model equation, and parameters; and an output step of outputting the melting ratio of the cold iron source computed in the computation step.

[5] The cold iron source melting ratio estimation method according to [4], wherein, in a case where the molten iron temperature and the carbon concentration in the molten iron input in the input step are estimated values computed without taking into consideration the melting ratio of the cold iron source obtained in the computation step one step earlier, the molten iron temperature and the carbon concentration in the molten iron that are input are corrected according to the melting ratio of the cold iron source one step earlier, and the corrected molten iron temperature and the corrected carbon concentration in the molten iron are used in the computation step.

[6] The cold iron source melting ratio estimation method according to [4], wherein the computation step includes: a step of performing a heat transfer computation using the input molten iron temperature to compute an interface temperature that is a temperature at an interface between the molten iron and the cold iron source; a step of computing an interface carbon concentration that is a carbon concentration at the interface between the molten iron and the cold iron source based on the interface temperature; and a step of performing a carbon mass balance computation near the interface between the molten iron and the cold iron source using the interface carbon concentration and the input carbon concentration in the molten iron to compute a melting rate of the cold iron source.

[7] The cold iron source melting ratio estimation method according to [5], wherein the computation step includes: a step of performing a heat transfer computation using the input molten iron temperature to compute an interface temperature that is a temperature at an interface between the molten iron and the cold iron source; a step of computing an interface carbon concentration that is a carbon concentration at the interface between the molten iron and the cold iron source based on the interface temperature; and a step of performing a carbon mass balance computation near the interface between the molten iron and the cold iron source using the interface carbon concentration and the input carbon concentration in the molten iron to compute a melting rate of the cold iron source.

[8] The cold iron source melting ratio estimation method according to [6], wherein the heat transfer computation is a computation using information of Heisler charts.

[9] The cold iron source melting ratio estimation method according to [7], wherein the heat transfer computation is a computation using information of Heisler charts.

[10] The cold iron source melting ratio estimation method according to any one of [4] to [9], wherein the refining is preliminary dephosphorization treatment of molten pig iron.

[11] A molten iron refining treatment method, including: using the cold iron source melting ratio estimation method according to any one of [4] to [9], monitoring the melting ratio of the cold iron source during refining of the molten iron, and, in a case where there is an anticipated occurrence of unmelted cold iron source remaining at an end of the refining, performing either one or both of addition of a heating agent and extension of a refining treatment time.

[12] The molten iron refining treatment method according to [11], wherein the refining is preliminary dephosphorization treatment of molten pig iron. Advantageous Effects of Invention

According to the present invention, it is possible to accurately estimate the melting behavior of a cold iron source in the refining of molten iron using a converter-type refining furnace in a short time while minimizing computational costs and without being influenced by the operator's subjectivity. Furthermore, a cold iron source melting model according to the present invention not only estimates the complete melting timing of the cold iron source, but also estimates the moment-by-moment melting ratio of the cold iron source, and accordingly, the occurrence of unmelted cold iron source during refining can also be predicted.

Brief Description of Drawings

[Fig. 1] Fig. 1 is a schematic diagram of a converter-type refining furnace equipped with a cold iron source melting ratio estimation device according to the present embodiment.

[Fig. 2] Fig. 2 is a flowchart of iron scrap melting ratio computation of the cold iron source melting ratio estimation device according to the present embodiment.

[Fig. 3] Fig. 3 is a diagram illustrating a comparison, in a first example, between the experimental results and the computation results obtained by a cold iron source melting model according to the present embodiment.

Description of Embodiments

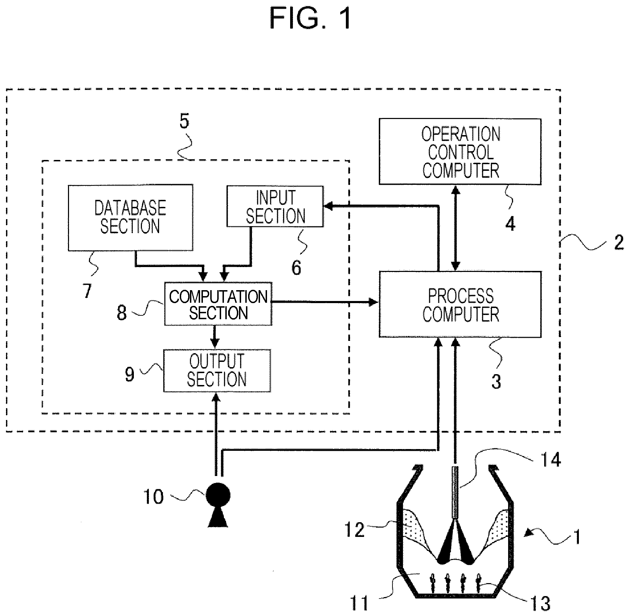

Hereinafter, an example of an embodiment of the present invention will be described with reference to the accompanying drawings. Fig. 1 is a schematic diagram of a converter-type refining furnace equipped with a cold iron source melting ratio estimation device according to the present invention. In Fig. 1, symbol 1 represents a converter-type refining furnace, 2 represents a converter-type refining furnace control device, 3 represents a process computer, 4 represents an operation control computer, 5 represents a cold iron source melting ratio estimation device, 6 represents an input section, 7 represents a database section, 8 represents a computation section, 9 represents an output section, 10 represents an operator, 11 represents molten pig iron, 12 represents slag, 13 represents stirring gas, and 14 represents a top blowing lance. The converter-type refining furnace control device 2 includes the process computer 3, the operation control computer 4, and the cold iron source melting ratio estimation device 5.

In the converter-type refining furnace 1, oxygen gas (industrial pure oxygen) is supplied from the top blowing lance 14 to the molten pig iron 11 charged in the furnace, and the stirring gas 13 is blown to the molten pig iron 11 in the furnace from tuyeres (not illustrated) provided at the bottom of the furnace. In other words, it is configured that the molten pig iron 11 charged in the furnace will be oxidized and refined by oxygen gas supplied from the top blowing lance 14 while being stirred by the stirring gas 13. Note that supplying oxygen gas from the top blowing lance 14 to the molten pig iron 11 in the furnace and oxidizing and refining it is also referred to as "blowing".

In the converter-type refining furnace 1, generally, as a refining treatment method, preliminary dephosphorization treatment of the molten pig iron 11 and decarburization treatment of the molten pig iron 11 are performed.

In preliminary dephosphorization treatment of the molten pig iron 11, firstly an iron scrap as a cold iron source is charged into the converter-type refining furnace 1 using a scrap chute (not illustrated), and then the molten pig iron 11 is charged into the furnace using a charging ladle (not illustrated). After charging the molten pig iron 11, oxygen gas is supplied from the top blowing lance 14, inert gas such as nitrogen gas is supplied as the stirring gas 13 from the tuyeres at the bottom of the furnace, and auxiliary raw materials such as a heating agent and a flux are added in a timely manner to perform preliminary dephosphorization treatment of the molten pig iron 11.

Preliminary dephosphorization treatment of the molten pig iron 11 in the converter-type refining furnace 1 is usually performed by oxidizing the phosphorus in the molten pig iron with oxygen gas to form phosphorus oxide ($P_2O_5$), and fixing the formed phosphorus oxide in a stable form of $3CaO \cdot P_2O_5$ (= $Ca_3(PO_4)_2$) in the slag 12 generated by the slagging process using a CaO-based flux. In preliminary dephosphorization treatment of the molten pig iron 11, the preliminary dephosphorization treatment ends when the phosphorus concentration in the molten pig iron 11 in the furnace reaches a certain value (such as 0.050 mass% or less). After the preliminary dephosphorization treatment, the molten pig iron that has gone through the dephosphorization treatment (referred to as "dephosphorized molten pig iron") is generated in the furnace.

In a decarburization treatment method for the molten pig iron 11, firstly an iron scrap is charged into the furnace using a scrap chute, and then the molten pig iron 11 is charged into the furnace using a charging ladle. After charging the molten pig iron 11, oxygen gas is supplied from the top blowing lance 14, the stirring gas 13 is supplied from the tuyeres at the bottom of the furnace, and auxiliary raw materials such as a cooling agent, heating agent, and flux are added in a timely manner to decarburize the molten pig iron 11.

Decarburization treatment of the molten pig iron 11 proceeds through a decarburization reaction ($C + O \rightarrow CO$) between the oxygen gas and the carbon in the molten iron, and the decarburization treatment is performed until the carbon concentration in the molten iron in the furnace reaches a certain value (such as 0.05 mass% or less). After the decarburization treatment, the molten pig iron in the furnace undergoes the decarburization treatment to generate molten steel. Here, "molten iron" is either molten pig iron or molten steel. In the decarburization treatment of the molten pig iron 11, the molten pig iron in the furnace changes to molten steel as the decarburization treatment progresses. Since it is difficult to distinguish between molten pig iron and molten steel in molten metal in the furnace during decarburization treatment, molten pig iron and molten steel are collectively referred to as "molten iron".

The process computer 3 is a device that computes the amount of oxygen to be supplied, and the necessity and the amount of loading a cooling agent or a heating agent in order to achieve target values for the molten pig iron temperature and the molten pig iron component concentration at the end of the preliminary dephosphorization treatment, as well as the molten iron temperature and the molten iron component concentration at the end of the decarburization treatment.

The operation control computer 4 is a device that controls operating conditions (such as oxygen gas supply amount, lance height, stirring gas supply amount, auxiliary raw material loading amount, etc.) so that target values will be achieved for the molten pig iron temperature and the molten pig iron component concentration at the end of the preliminary dephosphorization treatment, as well as the molten iron temperature (or molten steel temperature) and the molten iron component concentration (or molten steel component concentration) at the end of the decarburization treatment based on the oxygen amount and the loading amount of a cooling agent or a heating agent computed by the process computer 3. Signals of the operation control computer 4 are fed back to the process computer 3 to control the refining more precisely.

Hereinafter, the case in which the cold iron source melting ratio estimation device 5 according to the present embodiment is used in preliminary dephosphorization treatment of the molten pig iron 11 in the converter-type refining furnace 1 will be described as an example.

The cold iron source melting ratio estimation device 5 is a computer that forms a portion of the converter-type refining furnace control device 2, and includes the input section 6, the database section 7, the computation section 8, and the output section 9. The measured values or estimated values of in-furnace information, including the molten pig iron temperature and the carbon concentration in the molten pig iron before the start of the preliminary dephosphorization treatment or the molten pig iron temperature and the carbon concentration in the molten pig iron during the preliminary dephosphorization treatment, are successively input to the input section 6. The database section 7 stores a model equation and parameters related to a dephosphorization reaction of the molten pig iron 11 in the converter-type refining furnace 1. When the in-furnace information is input to the input section 6, the computation section 8 computes the melting ratio of the cold iron source in the furnace using the input in-furnace information. The output section 9 successively outputs the computation results of the melting ratio of the cold iron source obtained by the computation section 8.

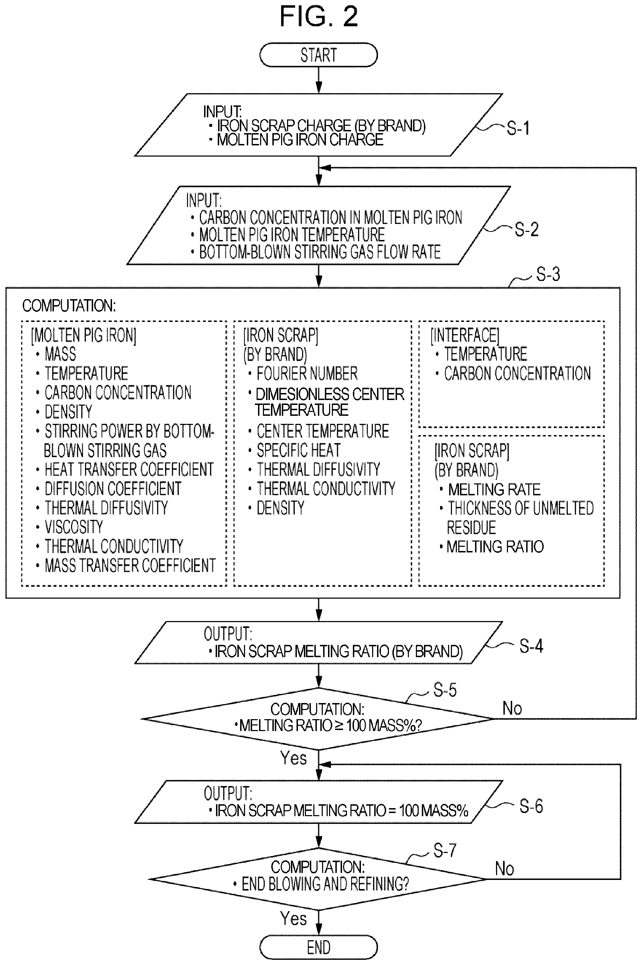

Fig. 2 illustrates a flowchart of iron scrap melting ratio computation of the cold iron source melting ratio estimation device 5.

The molten pig iron charge of the relevant charge and the charge of iron scrap by brand are input to the input section 6 (input step: S-1). In addition, the values of the moment-by-moment molten pig iron temperature and carbon concentration in the molten pig iron are input to the input section 6. Besides the values of the moment-by-moment molten pig iron temperature and carbon concentration in the molten pig iron, the moment-by-moment bottom-blown stirring gas flow rate is input (input step: S-2). The time interval at which the values such as the moment-by-moment molten pig iron temperature are input may be, for example, every minute, every 30 seconds, or every 5 seconds.

Here, the measured values may be used for the values of the moment-by-moment molten pig iron temperature and carbon concentration in the molten pig iron. In the case where the measured values are used, the input time interval cannot be shortened because it takes time to conduct analyses and measurements. In contrast, if the moment-by-moment molten pig iron temperature and carbon concentration in the molten pig iron are estimated based on information of the exhaust gas discharged from the converter-type refining furnace 1 during refining, the molten pig iron temperature and the carbon concentration in the molten pig iron can be obtained in a short time. Therefore, it is preferable to use the estimated value of the molten pig iron temperature and the estimated value of the carbon concentration in the molten pig iron as the input values.

The moment-by-moment estimation of the molten pig iron temperature and the carbon concentration in the molten pig iron can be performed as follows. First, the amount of oxygen used in the combustion of carbon in the molten pig iron is obtained by performing a correction computation so as to minimize the oxygen balance in the furnace based on the input amount of oxygen, such as the amount of delivered oxygen and the amount of iron oxide loaded, and the output amount of oxygen obtained from the exhaust gas flow rate and the exhaust gas components (such as CO gas concentration, $CO_2$ gas concentration, $O_2$ gas concentration, etc.). Then, based on the amount of oxygen used for the combustion of carbon in the molten pig iron, the amount of carbon in the combusted molten pig iron is obtained, and the carbon concentration in the molten pig iron is estimated based on the amount of carbon in the combusted molten pig iron. At that time, the molten pig iron temperature is estimated by converting changes in the computed carbon concentration into reaction heat.

Note that although the molten pig iron temperature and the carbon concentration in the molten pig iron change with the melting of the iron scrap, the impact of the melting of the iron scrap cannot be taken into consideration when the above estimated values are used as they are. For this reason, the estimated values computed by assuming that the iron scrap is completely melted may be used, as will be described later. In the meantime, for the bottom-blown stirring gas flow rate, the actual value measured using a flowmeter may be used.

The database section 7 stores a model equation, parameters, and physical property values related to refining reactions (such as "dephosphorization reactions" and "decarburization reactions") and heat transfer of the molten pig iron 11. The parameters include the initial thickness of the iron scrap, the initial temperature of the iron scrap, etc. These parameters are input by brand of iron scrap. In addition, the physical property values include the latent heat of melting of iron scrap and the specific heat of molten pig iron.

The computation section 8 calls the model equation, parameters, and physical property values from the database section 7, reads out the successively-input molten pig iron temperature and carbon concentration in the molten pig iron from the input section 6, inputs them with the parameters and physical property values into the model equation, and computes the melting ratio of the cold iron source (computation step S-3). The computation of the melting ratio of the cold iron source is performed whenever the molten pig iron temperature and the carbon concentration in the molten pig iron are input to the input section 6, or whenever the molten pig iron temperature and the carbon concentration in the molten pig iron are input to the input part 6 multiple times (but less than or equal to 20 times).

Here, the computation of the melting ratio of the cold iron source is preferably composed of the following steps: computing the interface temperature which is the temperature at the interface between the molten iron and the cold iron source through a heat transfer computation using the input molten pig iron temperature; computing the interface carbon concentration which is the carbon concentration at the interface based on the computed interface temperature; and computing the melting rate of the cold iron source by performing a carbon mass balance computation near the interface using the interface carbon concentration and the input carbon concentration in the molten pig iron. In addition, it is preferable that the heat transfer computation adopt a method using information of the Heisler charts, as will be described later. According to the method using information of the Heisler charts, the computation time can be made yet shorter.

The output section 9 is a device that displays the melting ratio of the cold iron source computed by the computation section 8, and is, for example, a liquid crystal display. The output section 9 displays the melting ratio of the cold iron source computed by the computation section 8 in a manner that is monitorable by the operator 10 who operates the converter-type refining furnace 1 (output step: S-4).

The operator 10 of the converter-type refining furnace 1 can watch the indication of the output section 9 and check how much iron scrap has melted at that point during the treatment of the relevant charge. This then allows the operator 10 to take actions according to the extent of melting of the iron scrap.

The specific content of the computation of the melting ratio of the cold iron source in the computation section 8 is discussed below. Note that formulas related to iron scrap, including its physical property values and melting rate, are to be computed by brand of iron scrap.

The mass, temperature, and carbon concentration of the molten pig iron used in computations are expressed by the following equations (2) to (4), respectively:

[Math. 2]

$$W = W_0 + \sum \left( \frac{S_m \times W_{S0}}{100} \right) \quad \cdots (2)$$

$$T = T_0 + \frac{H_m \times W_{S0} \times \left( \frac{100 - S_{m,t-1}}{100} \right)}{C_p \times W_{t-1}} + 273.15 \quad \cdots (3)$$

$$C = \frac{C_0 \times \left( W_0 + \sum W_S \right) - \sum C_S \times W_S \times \left( \frac{100 - S_m}{100} \right)}{W} \quad \cdots (4)$$

Here, W is the molten pig iron mass [ton]; $W_0$ is the molten pig iron charge [ton]; $S_m$ is the iron scrap melting ratio [mass%] ; $W_{S0}$ is the iron scrap charge [ton]; T is the molten pig iron temperature [K] used to compute the melting ratio of the cold iron source; $T_0$ is the molten pig iron temperature [°C] input to the input section; $H_m$ is the latent heat [MJ/ton] of melting of the iron scrap; $C_P$ is the specific heat [kJ/(kg $\times$ K)] of the molten pig iron; C is the carbon concentration in the molten pig iron [mass%] used to compute the melting ratio of the cold iron source; $C_0$ is the carbon concentration in the molten pig iron [mass%] input to the input section; $C_S$ is the carbon concentration in the iron scrap [mass%]; and $W_S$ is the unmelted iron scrap mass [ton]. Note that the index "t-1" indicates the value obtained by the computation one step earlier, and the same applies hereinafter.

The molten pig iron temperature and the carbon concentration in the molten pig iron change with the melting of the iron scrap. Therefore, in order to improve the computation accuracy, it is preferable to perform the computation in the next step using, as input values, the molten pig iron temperature and the carbon concentration in the molten pig iron which reflect the iron scrap melting ratio computed one step earlier. However, in order to perform this method, it is necessary to repeatedly perform computations, which requires the computation time. In contrast, if the estimated values of the molten pig iron temperature and the carbon concentration in the molten pig iron that do not take into consideration the iron scrap melting ratio are used, the computation accuracy will decrease because the impact of melting of the iron scrap cannot be taken into consideration.

For this reason, it is preferable to correct the estimated values of the molten pig iron temperature and the carbon concentration in the molten pig iron computed assuming that the iron scrap is completely melted, and use the corrected values. Here, equations (3) and (4) are equations that, in the case where the molten pig iron temperature and the carbon concentration in the molten pig iron input to the input section 6 are the estimated values computed assuming that the iron scrap is completely melted, correct them to the molten pig iron temperature and the carbon concentration in the molten pig iron according to the cold iron source melting ratio obtained by the computation one step earlier.

By using the corrected values obtained by equations (3) and (4) to compute the cold iron source melting ratio, the computation accuracy is improved. Note that the corrected values obtained by equations (3) and (4) are only used for the computation of the cold iron source melting ratio, and feedback will not be given to the computation for the estimation of the molten pig iron temperature and the estimation of the carbon concentration in the molten pig iron in the next step.

The physical property values of the molten pig iron, used in the computations, can be computed by, for example, equations (5) to (12) below:

[Math. 3]

$$\rho = 7.09 - 0.07 \times C \quad \cdots (5)$$

$$\varepsilon_B = 3.71 \times \left( \frac{Q_B/60}{10^3 \times W} \right) \times \ln\left( 1 + 10^3 \times \rho \times g \times \frac{L_0}{P} \right) \quad \cdots (6)$$

$$h = 5000 \times \left( 10^3 \times \varepsilon_B \times \rho \right)^{0.2} \quad \cdots (7)$$

$$D = 1.3877 \times 10^{-7} \times \exp\left( -\frac{0.556 \times 10^4}{T} \right) \quad \cdots (8)$$

[Math. 4]

$$\alpha = 6.2 \times 10^{-6} + 1.79 \times 10^{-9} \times (T - 1811) \quad \cdots (9)$$

$$\lambda = 10^6 \times \alpha \times C_p \times \rho \quad \cdots (10)$$

$$\log \mu = \frac{2920}{T} - 0.897 \quad \cdots (11)$$

$$k = Sc^{1/3} \times Pr^{-0.8} \times \frac{h \times D}{\lambda} = \left( \frac{\frac{\mu}{\rho} \times 10^{-6}}{D} \right)^{1/3} \times \left( \frac{\frac{\mu}{\rho} \times 10^{-6}}{\alpha} \right)^{-0.8} \times \frac{h \times D}{\lambda} \quad \cdots (12)$$

Here, $\rho$ is the density [ton/m³] of the molten pig iron; $\varepsilon_B$ is the stirring power [kW/ton] by the bottom-blown stirring gas; $Q_B$ is he stirring gas flow rate [Nm³/min]; g is the gravitational acceleration [m/s²]; $L_0$ is the bath depth [m] in the converter-type refining furnace; P is the atmospheric pressure in the furnace [Pa]; h is the heat transfer coefficient [W/(m² × K)]; D is the diffusion coefficient [m²/s] of the molten pig iron; $\alpha$ is the thermal diffusivity [m²/s] of the molten pig iron; $\lambda$ is the thermal conductivity [W/(m × K)] of the molten pig iron; $\mu$ is the viscosity [mPa × s] of the molten pig iron; k is the mass transfer coefficient [m/s] of the molten pig iron; Sc is the Schmidt number [-]; and Pr is the Prandtl number [-].

Note that equation (7) is an empirical formula obtained by analyzing the melting behavior of iron scrap in a top-blown converter-type refining furnace with a capacity of 310 tons and a bottom-blown converter-type refining furnace with a capacity of 240 tons, described in Publication 1 (Publication 1: H. Gaye, M. Wanin, P. Gugliermina and P. Schittly: 68th Steelmaking Conf. Proc., ISS, Detroit, MI, USA, (1985), 91). In addition, equations (5), (8), (9), and (11) are equations derived from literature values reported in references, transformed into the form of functions of the molten pig iron temperature and the carbon concentration in the molten pig iron. Here, equation (8)is an equation that represents the self-diffusion coefficient of carbon in an iron-carbon molten alloy, and equations (9) and (11) represent the thermal diffusivity and viscosity of the molten pig iron, respectively, but both ignore the impact of carbon concentration.

The physical property values of the iron scrap, used in the computations, can be computed by, for example, equations (13) to (19) below:

[Math. 5]

$$Fo = \frac{4 \times \alpha_{S,t-1} \times t}{t_{S,t-1}^2} \quad \cdots(13)$$

$$\theta = 1.2828 \times \exp\left(-2.491 \times Fo\right) \quad \cdots(14)$$

$$T_S = \left(T_{S0} - T\right) \times \theta + T \quad \cdots(15)$$

$$C_{PS} = \frac{24.5 + 8.45 \times 10^{-3} \times T_S}{55.845} \quad \cdots(16)$$

[Math. 6]

$$\alpha_S = 6.2 \times 10^{-6} + 1.79 \times 10^{-9} \times \left(T - 1811\right) \quad \cdots(17)$$

$$\lambda_S = -41.72 \times \ln T_s + 319.93 \quad \cdots(18)$$

$$\rho_S = \frac{\lambda_S}{10^6 \times \alpha_S \times C_{PS}} \quad \cdots(19)$$

Here, Fo is the Fourier number [-]; $\alpha_s$ is the thermal diffusivity [m²/s] of the iron scrap; t is time [s]; $t_s$ is the thickness [m] of the iron scrap; $\theta$ is the dimensionless center temperature [-] of the iron scrap; $T_S$ is the center temperature [K] of the iron scrap; $C_{PS}$ is the specific heat [kJ/(kg × K)] of the iron scrap; $\lambda_S$ is the thermal conductivity [W/(m × K)] of the iron scrap; and $\rho_S$ is the density [ton/m³] of the iron scrap.

Note that, in equation (14), changes in the dimensionless center temperature of the iron scrap are assumed to follow the Heisler charts with an infinite Biot number (Bi = ∞) and a flat plate. Also, assuming that the temperature of the iron scrap is not uneven but rather uniform, the center temperature of the iron scrap is computed by equation (15). Furthermore, equations (16) to (18) are equations derived from literature values reported in references, transformed into the form of functions of the iron scrap temperature, and they all ignore the impact of carbon concentration.

If the molten pig iron and the iron scrap are regarded as semi-infinite objects with uniform temperature, the interface temperature $T_i$ [K] is theoretically represented by equation (20) below:

[Math. 7]

$$T_i = \frac{\sqrt{\rho_S \times C_{PS} \times \lambda_S} \times T_S + \sqrt{\rho \times C_P \times \lambda} \times T}{\sqrt{\rho_S \times C_{PS} \times \lambda_S} + \sqrt{\rho \times C_P \times \lambda}} \quad \cdots(20)$$

As mentioned above, in conventional computations for the melting of a cold iron source, a method of computing the temperature distribution inside the cold iron source and the interface temperature using the one-dimensional heat transfer formula indicated in equation (1) above is common. However, if equation (1) is to be computed on a computer, it is necessary to be treated discretely. At that time, if the computation mesh is refined to improve the computation accuracy, the computation will become costly and real-time computation will become difficult, whereas, if the computation mesh is coarsened to shorten the computation time and to reduce the computational cost, the computation accuracy is sacrificed.

In the present invention, in order to achieve both computational cost reduction and computation accuracy, generally, the number of computations and the computation time can be greatly reduced by using a cold iron source melting model that replaces computations for the temperature distribution inside the cold iron source and the interface temperature indicated in equation (1) with equations (13) to (20).

Furthermore, if the liquidus temperature at the interface carbon concentration $C_i$ is the interface temperature $T_i$, then the interface carbon concentration $C_i$ in an iron-carbon binary alloy is represented by equation (21) below:

[Math. 8]

$$C_i = -3.6 \times 10^{-6} \times T_i^2 + 1.032 \times 10^{-3} \times T_i + 9.99 \quad \cdots (21)$$

Here, $C_i$ is the interface carbon concentration [mass%], and $T_i$ is the interface temperature [K].

From the carbon mass balance near the interface, the melting rate $\Delta t_s$ of the iron scrap is represented by equation (22) below. Note that $\Delta t_s$ indicates a positive value when the melting of the iron scrap progresses.

[Math. 9]

$$\Delta t_S = \left( \frac{C - C_i}{C_i - C_S} \right) \times k \quad \cdots (22)$$

Here, $\Delta t_s$ is the melting rate [m/s] of the iron scrap, and k is the mass transfer coefficient [m/s] of the molten pig iron.

If the iron scrap is uniformly melted only from both sides in the thickness direction and becomes thinner, the thickness $t_s$ of the iron scrap is represented by equation (23) below, and the melting ratio $S_m$ of the iron scrap is represented by equation (24) below:

[Math. 10]

$$t_S = t_{S,t-1} - 2 \times \Delta t_{S,t-1} \times \Delta t \quad \cdots (23)$$

$$S_m = \left( 1 - \frac{t_S}{t_{S0}} \right) \times 100 \quad \cdots (24)$$

Here, $\Delta t$ is the computation time interval [s], and $t_{S0}$ is the initial thickness [m] of the iron scrap.

Through the above computations, the melting ratio transition of the iron scrap during the preliminary dephosphorization treatment of the molten pig iron 11 can be obtained.

The computation section 8 determines whether the melting ratio of iron scrap of all brands is 100 mass% (computation step: S-5). If the iron scrap melting ratio is less than 100 mass%, the computation section 8 repeatedly computes the iron scrap melting ratio. In contrast, if the melting ratio of iron scrap of all brands is 100 mass%, "iron scrap melting ratio = 100 mass%" is displayed on the output section 9 (output step: S-6).

If the signal "end blowing" is input from the process computer 3 via the input section 6, the computation section 8 ends the computation of the iron scrap melting ratio (computation step: S-7). In contrast, until the signal "end blowing" is received from the process computer 3, "iron scrap melting ratio = 100 mass%" is continuously displayed on the output section 9.

The computation results of the iron scrap melting ratio are successively displayed on the output section 9. The operator 10 monitors the output section 9 and, if there is an anticipated occurrence of unmelted iron scrap remaining at the end of the preliminary dephosphorization treatment (the end of refining) based on the transition of the iron scrap melting ratio, performs either one or both of the addition of a heating agent, such as an iron-silicon alloy or coke, and the extension of the preliminary dephosphorization treatment time (refining treatment time) in order to completely melt the iron scrap. Note that if the unmelted residue is 5 mass% or less, there will be no significant issues even if the addition of a heating agent or the extension of the preliminary dephosphorization treatment time is not adopted.

Although the above description describes the case by way of example in which the cold iron source melting ratio estimation device 5 according to the present embodiment is used for the preliminary dephosphorization treatment of the molten pig iron 11 in the converter-type refining furnace 1, the cold iron source melting ratio estimation device 5 according to the present embodiment can also be used for the decarburization treatment of the molten pig iron 11 in the converter-type refining furnace 1 in accordance with the above. Note that, in the decarburization treatment of the molten pig iron 11, molten pig iron in the furnace changes to molten steel as the decarburization treatment progresses. Since it is difficult to distinguish between molten pig iron and molten steel in molten metal in the furnace during the decarburization and refining treatment, the cold iron source melting ratio estimation device 5 according to the present embodiment is used by replacing the "carbon concentration in the molten pig iron" in Fig. 2 with "carbon concentration in the molten iron" and the "molten pig iron temperature" with "molten iron temperature".

As described above, by using the cold iron source melting ratio estimation device 5 according to the present embodiment, it is possible to accurately estimate the melting behavior of the cold iron source in the refining of molten iron using the converter-type refining furnace in a short time while minimizing computational costs and without being influenced by the operator's subjectivity. Furthermore, since not only the complete melting timing of the cold iron source, but also the moment-by-moment melting ratio of the cold iron source is estimated by the cold iron source melting model according to the present embodiment, the occurrence of unmelted cold iron source during refining can also be predicted.

First Example

An experiment was conducted using a cylindrical furnace with an inner diameter of 430 mm to prepare 300 kg of molten pig iron. In this molten pig iron, a rectangular pure iron sample (size: 50 mm × 50 mm × 100 mm), simulating a cold iron source (iron scrap), was immersed by 80 mm, and the melting ratio of the sample after a certain period of time was investigated.

The temperature and carbon concentration of the molten pig iron are in two combinations: (1) equivalent to the start of the preliminary dephosphorization treatment of the molten pig iron (the molten pig iron temperature = 1300°C, and the carbon concentration in the molten pig iron = 3.8 mass%); and (2) equivalent to the end of the preliminary dephosphorization treatment of the molten pig iron (the molten pig iron temperature = 1400°C, and the carbon concentration in the molten pig iron = 2.8 mass%). Note that gas was not blown into the molten pig iron, and the molten pig iron was stirred by natural convection.

After the sample was immersed for a certain period of time, it was collected and cooled naturally, and the melting ratio of the sample was computed by equation (25) below:

[Math. 11]

$$S'_m = \frac{L_S \times (W_{S0} - W_S)}{W_{S0} \times D_S} \times 100 \quad \cdots (25)$$

In equation (25) above, $S'_m$ is the melting ratio [mass%] of the sample; $W_{S0}$ is the sample mass [kg] before immersion; $W_S$ is the sample mass [kg] after immersion; $L_S$ is the height (= 100 [mm]) of the sample; and $D_S$ is the immersion depth [mm] of the sample.

In addition, for the measurement of the molten pig iron temperature and the carbon concentration in the molten pig iron, measurements of the molten pig iron temperature were conducted as needed before and after sample immersion using an immersion-type thermocouple, and samples for chemical analysis were collected from the molten pig iron.

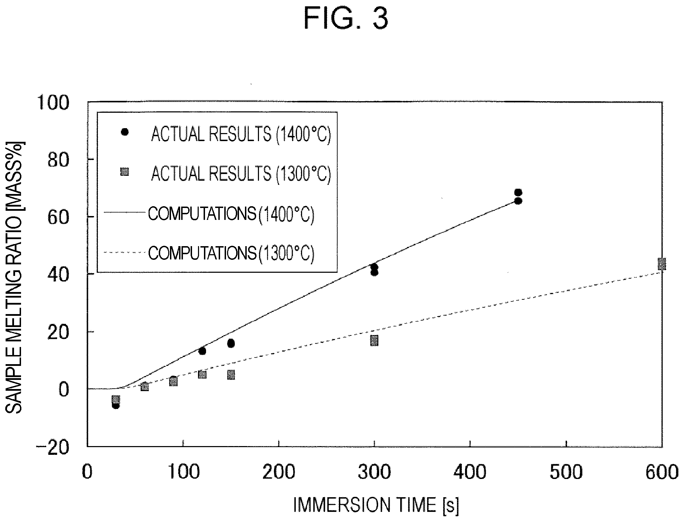

Fig. 3 illustrates a comparison between the experimental results and the computation results obtained by the cold iron source melting model according to the present embodiment. In the cold iron source melting model according to the present embodiment, the time interval of inputting values such as the molten pig iron temperature was set to every 5 seconds, and the melting ratio of the cold iron source was computed whenever values such as the molten pig iron temperature were input. From Fig. 3, it was found that, by using the cold iron source melting model according to the present embodiment, the melting transition of the cold iron source can be accurately estimated. In Fig. 3, the actual value of the melting ratio of the sample with the shortest immersion time is negative. This is because the temperature of the iron scrap was low, the surrounding molten steel solidified and adhered to the iron scrap, and the mass of the iron scrap increased, leading to an apparent negative value for the sample melting ratio.

Second Example

In a top-bottom blown converter-type refining furnace (top-blown oxygen + bottom-blown argon gas) with a capacity of 320 tons, a cold iron source (iron scrap) was charged into the converter-type refining furnace from a scrap chute by 7 to 50 tons, and then molten pig iron was charged to perform preliminary dephosphorization treatment of the molten pig iron in the furnace.

At the same time as the start of the preliminary dephosphorization treatment, assuming that the iron scrap is completely melted, the molten pig iron temperature and the carbon concentration in the molten pig iron were separately estimated based on the exhaust gas information, etc. Using these estimated values of in-furnace information and the actual value of the bottom-blown flow rate, the melting behavior of the iron scrap was estimated in real time by the cold iron source melting model according to the present embodiment. In this example, the time interval of inputting values such as the molten pig iron temperature was set to every 5 seconds, and the melting ratio of the cold iron source was computed whenever values such as the molten pig iron temperature were input.

The computed values of the unmelted ratio of the iron scrap at the completion of the dephosphorization treatment are presented in Table 1. In Table 1, "Unmelted residue occurrence" refers to charges where actual unmelted iron scrap was confirmed at the completion of the dephosphorization treatment. "Unmelted residue concern" represents charges where, although no unmelted iron scrap was confirmed at the completion of the dephosphorization treatment, there are suspicions of the occurrence of unmelted iron scrap, based on the transition of the molten pig iron temperature or the carbon concentration in the molten pig iron. "No unmelted residue" refers to charges where no unmelted iron scrap was confirmed at the completion of the dephosphorization treatment, and there were no suspicions of the occurrence of unmelted iron scrap.

[Table 1]

| Category | Number of charges | Model determination (Number of charges) | | Unmelted residue determination ratio |
|---|---|---|---|---|
| | | Unmelted | Melted | |
| Unmelted residue occurrence | 1 | 1 | 0 | 100 |
| Unmelted residue concern | 11 | 8 | 3 | 73 |
| No unmelted residue | 98 | 10 | 88 | 10 |

As presented in Table 1, in cases labeled as 'No unmelted residue", there was a 10% probability of determining unmelted iron scrap among the number of charges. Conversely, in cases labeled as "Unmelted residue occurrence", there was a 100% probability of detecting unmelted iron scrap. From this result, although the cold iron source melting model according to the present embodiment tends to over-detect unmelted iron scrap, it has succeeded in detecting charges where unmelted iron scrap occurred. In addition, from the fact that, in cases labeled as "Unmelted residue concern", there was a 73% probability of determining unmelted iron scrap among the number of charges, it was confirmed that the cold iron source melting ratio estimation device and the cold iron source melting ratio estimation method according to the present embodiment can be applied to actual operation.

Reference Signs List

| | |
|---|---|
| 1 | converter-type refining furnace |
| 2 | converter-type refining furnace control device |
| 3 | process computer |
| 4 | operation control computer |
| 5 | cold iron source melting ratio estimation device |
| 6 | input section |
| 7 | database section |
| 8 | computation section |
| 9 | output section |
| 10 | operator |
| 11 | molten pig iron |
| 12 | slag |
| 13 | stirring gas |
| 14 | top blowing lance |

**Claims**

1. A cold iron source melting ratio estimation device for estimating a melting ratio of a cold iron source charged into a converter-type refining furnace during refining of molten iron in the converter-type refining furnace, the device comprising:

   an input section to which measured values of in-furnace information or estimated values of the in-furnace information are input, the in-furnace information including a molten iron temperature and a carbon concentration in the molten iron during refining;
   a database section that stores a model equation and parameters related to a refining reaction of the molten iron in the converter-type refining furnace;

a computation section that computes the melting ratio of the cold iron source using the measured values or the estimated values input to the input section; and

an output section that displays the melting ratio of the cold iron source computed by the computation section.

2. The cold iron source melting ratio estimation device according to Claim 1, wherein the output section displays in a manner that is monitorable by an operator who operates the converter-type refining furnace.

3. A converter-type refining furnace control device comprising:

the cold iron source melting ratio estimation device according to Claim 1 or Claim 2;

a process computer that computes an amount of oxygen to be supplied, and necessity and an amount of loading a cooling agent or a heating agent in order to achieve target values for the molten iron temperature and a molten iron component concentration at an end of the refining; and

an operation control computer that controls operating conditions so that target values will be achieved for the molten iron temperature and the molten iron component concentration at the end of the refining based on the amount of oxygen and the amount of loading a cooling agent or a heating agent computed by the process computer.

4. A cold iron source melting ratio estimation method of estimating, using a computer, a melting ratio of a cold iron source charged into a converter-type refining furnace during refining of molten iron using the converter-type refining furnace, the method comprising:

an input step of inputting, to the computer, measured values of in-furnace information or estimated values of the in-furnace information, the in-furnace information including a molten iron temperature and a carbon concentration in the molten iron during refining;

a computation step of computing the melting ratio of the cold iron source using the measured values or the estimated values input to the computer, a model equation, and parameters; and

an output step of outputting the melting ratio of the cold iron source computed in the computation step.

5. The cold iron source melting ratio estimation method according to Claim 4, wherein, in a case where the molten iron temperature and the carbon concentration in the molten iron input in the input step are estimated values computed without taking into consideration the melting ratio of the cold iron source obtained in the computation step one step earlier,

the molten iron temperature and the carbon concentration in the molten iron that are input are corrected according to the melting ratio of the cold iron source one step earlier, and the corrected molten iron temperature and the corrected carbon concentration in the molten iron are used in the computation step.

6. The cold iron source melting ratio estimation method according to Claim 4, wherein the computation step comprises:

a step of performing a heat transfer computation using the input molten iron temperature to compute an interface temperature that is a temperature at an interface between the molten iron and the cold iron source;

a step of computing an interface carbon concentration that is a carbon concentration at the interface between the molten iron and the cold iron source based on the interface temperature; and

a step of performing a carbon mass balance computation near the interface between the molten iron and the cold iron source using the interface carbon concentration and the input carbon concentration in the molten iron to compute a melting rate of the cold iron source.

7. The cold iron source melting ratio estimation method according to Claim 5, wherein the computation step comprises:

a step of performing a heat transfer computation using the input molten iron temperature to compute an interface temperature that is a temperature at an interface between the molten iron and the cold iron source;

a step of computing an interface carbon concentration that is a carbon concentration at the interface between the molten iron and the cold iron source based on the interface temperature; and

a step of performing a carbon mass balance computation near the interface between the molten iron and the cold iron source using the interface carbon concentration and the input carbon concentration in the molten iron to compute a melting rate of the cold iron source.

8. The cold iron source melting ratio estimation method according to Claim 6, wherein the heat transfer computation is a computation using information of Heisler charts.

9. The cold iron source melting ratio estimation method according to Claim 7, wherein the heat transfer computation is a computation using information of Heisler charts.

10. The cold iron source melting ratio estimation method according to any one of Claims 4 to 9, wherein the refining is preliminary dephosphorization treatment of molten pig iron.

11. A molten iron refining treatment method, comprising: using the cold iron source melting ratio estimation method according to any one of Claims 4 to 9, monitoring the melting ratio of the cold iron source during refining of the molten iron, and, in a case where there is an anticipated occurrence of unmelted cold iron source remaining at an end of the refining, performing either one or both of addition of a heating agent and extension of a refining treatment time.

12. The molten iron refining treatment method according to Claim 11, wherein the refining is preliminary dephosphorization treatment of molten pig iron.

# FIG. 1

# FIG. 2

START

INPUT:
• IRON SCRAP CHARGE (BY BRAND)
• MOLTEN PIG IRON CHARGE
S-1

INPUT:
• CARBON CONCENTRATION IN MOLTEN PIG IRON
• MOLTEN PIG IRON TEMPERATURE
• BOTTOM-BLOWN STIRRING GAS FLOW RATE
S-2

S-3

COMPUTATION:

[MOLTEN PIG IRON]
• MASS
• TEMPERATURE
• CARBON CONCENTRATION
• DENSITY
• STIRRING POWER BY BOTTOM-BLOWN STIRRING GAS
• HEAT TRANSFER COEFFICIENT
• DIFFUSION COEFFICIENT
• THERMAL DIFFUSIVITY
• VISCOSITY
• THERMAL CONDUCTIVITY
• MASS TRANSFER COEFFICIENT

[IRON SCRAP]
(BY BRAND)
• FOURIER NUMBER
• DIMESIONLESS CENTER TEMPERATURE
• CENTER TEMPERATURE
• SPECIFIC HEAT
• THERMAL DIFFUSIVITY
• THERMAL CONDUCTIVITY
• DENSITY

[INTERFACE]
• TEMPERATURE
• CARBON CONCENTRATION

[IRON SCRAP]
(BY BRAND)
• MELTING RATE
• THICKNESS OF UNMELTED RESIDUE
• MELTING RATIO

OUTPUT:
• IRON SCRAP MELTING RATIO (BY BRAND)
S-4

COMPUTATION:
• MELTING RATIO ≥ 100 MASS%?
S-5
No

Yes

OUTPUT:
• IRON SCRAP MELTING RATIO = 100 MASS%
S-6

COMPUTATION:
• END BLOWING AND REFINING?
S-7
No

Yes

END

# FIG. 3

| | INTERNATIONAL SEARCH REPORT | International application No. |
|---|---|---|
| | | **PCT/JP2022/023807** |

**A.    CLASSIFICATION OF SUBJECT MATTER**

*C21C 5/30*(2006.01)i; *C21C 1/02*(2006.01)i
FI:    C21C5/30 Z; C21C1/02 110

According to International Patent Classification (IPC) or to both national classification and IPC

**B.    FIELDS SEARCHED**

Minimum documentation searched (classification system followed by classification symbols)

C21C1/02; C21C5/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2016-132809 A (NIPPON STEEL & SUMITOMO METAL CORP) 25 July 2016 (2016-07-25) claims, paragraphs [0009]-[0057] | 1, 4 |
| Y | | 2-3, 10-12 |
| A | | 5-9 |
| Y | JP 2005-206901 A (KOBE STEEL LTD) 04 August 2005 (2005-08-04) paragraphs [0005]-[0019] | 2, 3, 10-12 |
| A | | 1, 4-9 |
| A | JP 5-9538 A (NKK CORP) 19 January 1993 (1993-01-19) claims | 1-12 |
| A | CN 111235339 A (CISDI ENGINEERING CO., LTD.) 05 June 2020 (2020-06-05) entire text, all drawings | 1-12 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 August 2022** | **30 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/023807**

| Patent document cited in search report | | | Publication date (day/month/year) | Patent family member(s) | Publication date (day/month/year) |
|---|---|---|---|---|---|
| JP | 2016-132809 | A | 25 July 2016 | (Family: none) | |
| JP | 2005-206901 | A | 04 August 2005 | (Family: none) | |
| JP | 5-9538 | A | 19 January 1993 | (Family: none) | |
| CN | 111235339 | A | 05 June 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8003614 A


**Non-patent literature cited in the description**

- **MASAHIRO KAWAKAMI ; KOICHI TAKAYA ; LVIV BRAVIER.** *Tetsutohagane (Iron and Steel),* 1999, vol. 85 (9), 658-665
- **KOICHI ISOBE ; HIROFUMI MAEDE ; KOSAKU OZAWA ; ISSEI UMEZAWA ; CHIKARA SAITO.** *Tetsutohagane (Iron and Steel),* 1990, vol. 76 (11), 2033-2040
- **H. GAYE ; M. WANIN ; P. GUGLIERMINA ; P. SCHITTLY.** *68th Steelmaking Conf. Proc., ISS, Detroit, MI, USA,* 1985, 91